# FASCICULE DE BREVET EUROPEEN

(11) **EP 3 739 221 B1**
(45) Date de publication et mention de la délivrance du brevet: **13.09.2023**
(21) Numéro de dépôt: 20174231.9
(22) Date de dépôt: 12.05.2020
(51) Int. Cl.: F15B 15/22, B64C 25/02

(54) **VERIN HYDRAULIQUE EQUIPE D'UN DISPOSITIF DE RALENTISSEMENT DE FIN DE COURSE**
HYDRAULIKZYLINDER, DER MIT EINER VORRICHTUNG ZUR VERLANGSAMUNG AM ENDANSCHLAG AUSGESTATTET IST
HYDRAULIC CYLINDER PROVIDED WITH A DEVICE FOR SLOWING END-OF-TRAVEL

(30) Priorité: 13.05.2019 FR 1904966
(43) Date de publication de la demande: 18.11.2020
(73) Titulaire: Safran Landing Systems, 78140 Vélizy-Villacoublay (FR)
(72) Inventeur: KAMIS, Jean-Baptiste, 77550 MOISSY-CRAMAYEL (FR); ROGER, Jean-Charles, 77550 MOISSY-CRAMAYEL (FR)
(74) Mandataire: Lavialle, Bruno François Stéphane

(56) Documents cités:
- EP-A1- 3 150 863
- FR-A- 633 581
- US-A- 2 553 810
- US-A- 3 999 463
- US-A- 4 138 928
- US-A- 5 692 429

## Description

### ARRIERE PLAN DE L'INVENTION

On connaît des vérins hydrauliques, utilisés notamment pour la manoeuvre des trains d'atterrissage des aéronefs, comportant un cylindre dans lequel un piston est monté pour coulisser. Le piston délimite dans le cylindre une chambre hydraulique d'extension et une chambre hydraulique de rétraction reliées à un circuit hydraulique par des ports respectifs. Ce type de vérin peut être équipé d'un dispositif de ralentissement de fin de course pour ralentir le déplacement de la tige lors d'une rétraction de la tige à l'approche de la butée. A cet effet, le port associé à la chambre d'extension débouche au fond d'une cavité aménagée dans l'extrémité du cylindre. La tige comporte une protrusion qui, à l'approche de la butée de fin de course, pénètre à ajustement dans la cavité, obligeant le fluide encore contenu dans la chambre d'extension à s'écouler par l'espace annulaire laissé entre la protrusion et la paroi de la cavité, ce qui génère une augmentation de pression dans la chambre d'extension qui freine le piston et contribue à ralentir la tige avant son arrivée en butée.

Ce dispositif de ralentissement demande une grande précision d'usinage et des jeux de fonctionnement très calibrés. Il est en outre sensible aux variations de températures puisque l'écoulement annulaire est essentiellement laminaire alors qu'il est turbulent aux températures élevées, ce qui occasionne une variation importante du coefficient d'amortissement.

Des dispositifs de ralentissement sont par exemple connus des documents FR-A-663581, US-A-4138928, US-A-2553810.

### OBJET DE L'INVENTION

L'invention a pour objet de proposer un vérin hydraulique télescopique équipé de moyens de ralentissement de la tige en fin de course simples à implémenter et peu sensibles à la température.

### RESUME DE L'INVENTION

En vue de la réalisation de cette fonction, on propose un vérin hydraulique comportant un cylindre dans lequel un piston solidaire d'une tige est monté à coulissement étanche pour délimiter dans le cylindre une chambre hydraulique d'extension et une chambre hydraulique de rétraction reliées à des ports respectifs, le vérin hydraulique comportant des moyens de ralentissement du piston quand le piston s'approche d'une position rétractée. Selon l'invention, les moyens de ralentissement comportent des premier et deuxième conduits hydrauliques s'étendant du port d'extension à la chambre d'extension, le premier conduit hydraulique comportant un siège tandis que le piston porte un doigt rétractable ayant une extrémité qui vient en appui contre le siège pour fermer le premier quand le piston s'approche de la position rétractée, de sorte que seul le deuxième conduit hydraulique reste ouvert alors que le piston finit sa course vers la position rétractée.

Ainsi, lorsque le doigt vient en appui contre le siège, le premier conduit hydraulique est fermé, et le fluide est contraint de s'écouler par le deuxième conduit, ce qui diminue la section de passage du fluide et exerce donc une résistance qui ralentit le piston finissant sa course vers la position rétractée. Le doigt se rétracte alors progressivement dans le piston au fur et à mesure du déplacement de celui-ci, tout en restant en appui contre le siège.

Cette disposition est très simple à mettre en œuvre et ne nécessite pas l'exécution de jeux de fonctionnement précis. Il suffit de permettre au doigt de flotter transversalement pour permettre son autocentrage dans le siège et garantir une fermeture sinon étanche, du moins suffisamment importante pour en pratique forcer le fluide à passer par le deuxième conduit.

Selon une disposition particulière de l'invention, les conduits hydrauliques s'étendent dans un fond du cylindre. De préférence alors, le siège est rapporté sur le fond du cylindre.

Alternativement, les conduits hydrauliques sont réalisés dans un diaphragme rapporté ou dans un trou calibré dans le fond du cylindre.

De préférence, le doigt est monté coulissant sur le piston selon un axe central du cylindre.

Selon une autre disposition particulière de l'invention, l'extrémité du doigt est conique pour permettre un meilleur guidage.

Le doigt est rétractable à l'encontre de l'action de moyens de rappel poussant le doigt vers une position saillante du piston. Un drain est aussi prévu dans le corps pour éviter d'emprisonner la pression entre la tige et le corps du doigt rétractable.

Selon l'invention, le siège est précédé d'une virole destinée à coopérer avec l'extrémité du doigt avant que celle-ci ne vienne en appui contre le siège pour diminuer progressivement une section de passage du premier conduit hydraulique et permettre le centrage (conique ou circulaire).

### BREVE DESCRIPTION DES DESSINS

L'invention sera mieux comprise à la lumière de la description qui suit des figures des dessins annexés, parmi lesquelles :
[Fig. 1] La figure 1 est une vue en coupe schématique d'un vérin hydraulique muni d'un dispositif de ralentissement qui n'est pas couvert par le texte des revendications, illustré alors que le piston approche de la position rétractée, l'extrémité du doigt n'étant pas encore en appui contre le siège ;
[Fig.2] La figure 2 est une vue analogue à celle de la figure 1, le même vérin étant illustré au moment où l'extrémité du doigt vient au contact du siège ;
[Fig.3] La figure 3 est une vue analogue à celle de la figure 1, le même vérin étant illustré au moment où le piston arrive en position rétractée ;
[Fig.4] La figure 4 illustre une variante de réalisation du vérin de la figure 1 qui n'est pas couverte par le texte des revendications, dans laquelle le deuxième fond reçoit un diaphragme dans lequel sont réalisés les deux conduits hydrauliques ;
[Fig.5] La figure 5 montre un siège pouvant équiper le vérin de la figure 1 ou de la figure 4, le siège étant associé à une virole d'entrée qui coopère avec l'extrémité du doigt pour fermer progressivement une section de passage du premier conduit.

### DESCRIPTION DETAILLEE DE L'INVENTION

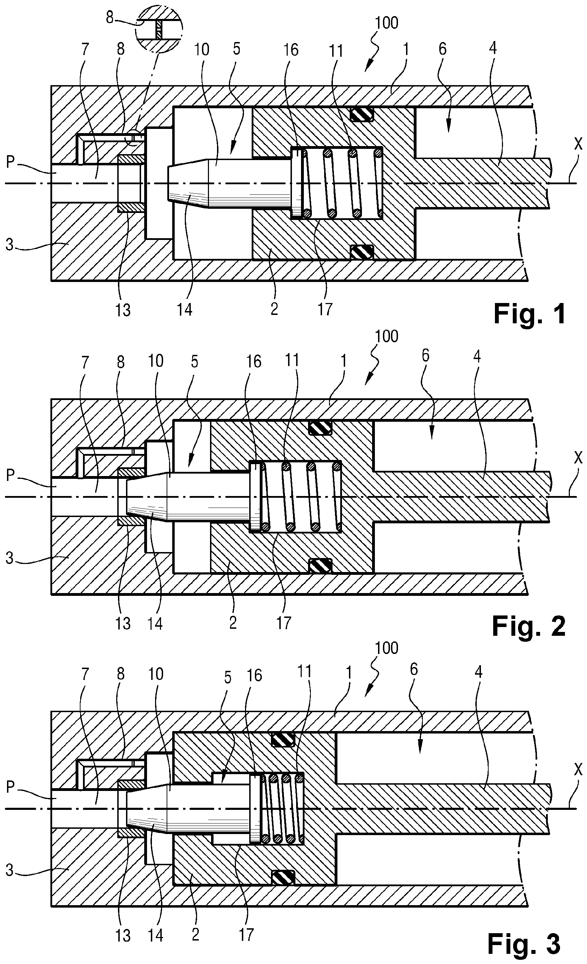

En référence aux figures 1 à 3, qui ne sont pas couvertes par le texte des revendications mais sont considérées comme utiles à la compréhension de l'invention qui s'applique à un vérin hydraulique 100 comportant un cylindre 1 creux dans lequel un piston 2 est monté pour coulisser selon un axe longitudinal X, ici l'axe central du cylindre 1. Le cylindre est délimité de part et d'autre par un premier fond (non visible ici) traversé par une tige 4 solidaire du piston 2, et un deuxième fond 3 visible ici. Le piston 2 délimite dans le cylindre 1 une chambre hydraulique d'extension 5 et une chambre hydraulique de rétraction 6. La chambre d'extension est ici reliée à un port d'expansion P.

Le port d'extension P est relié à la chambre d'extension 5 par un premier conduit hydraulique 7 de diamètre suffisamment important pour n'induire que des pertes de charges mineures, et un deuxième conduit hydraulique 8 de diamètre plus faible, formant volontairement une restriction pour le passage du fluide.

En outre, le piston 2 porte un doigt 10 monté coulissant sur le piston 2, ici selon l'axe longitudinal X, à l'encontre de l'action d'un ressort 11 qui rappelle le doigt vers une position saillante définie par la coopération d'une collerette 16 s'étendant en saillie d'une portion d'extrémité du doigt 10 avec un épaulement d'une cavité 17 du piston 2 recevant le ressort 11 et ladite portion d'extrémité du doigt 10. Le premier conduit hydraulique 7 comporte un siège 13 rapporté sur le deuxième fond 3 et disposé en regard d'une extrémité conique 14 du doigt 10. Le doigt 10, le ressort 11, le siège 13, et les deux conduits hydrauliques 7, 8 forment ensemble le dispositif de ralentissement, dont le fonctionnement est maintenant détaillé.

Lorsque du fluide sous pression est admis dans la chambre de rétraction 6, le piston 2 se déplace en direction du deuxième fond 3. Tant que le piston 2 est éloigné du deuxième fond 3, comme illustré à la figure 1, l'extrémité 14 du doigt 10 est éloignée du siège 13 et le fluide présent dans la chambre d'extension 5 est expulsé de celle-ci vers le port P via le premier conduit hydraulique 7.

Le piston 2 continuant sa course, l'extrémité 14 du doigt 10 vient en appui contre le siège 13, comme illustré à la figure 2, ce qui ferme le premier conduit hydraulique 7 et oblige le fluide à s'écouler via le deuxième conduit hydraulique 8. Le deuxième conduit hydraulique 8 comprend une restriction localisée de section de sorte que l'écoulement du fluide par le deuxième conduit hydraulique 8 génère une augmentation de pression dans la chambre d'extension 5 qui contribue à ralentir le piston 2. On notera qu'un tel écoulement se produit en régime turbulent. L'orifice formant la restriction localisée de section, qui est ici percé dans une plaque mince montée transversalement dans le conduit hydraulique 8 (ladite plaque n'étant symbolisée que sur la figure 1), va permettre d'augmenter la vitesse du fluide et va générer la turbulence, de sorte que la résistance qu'il génère est peu sensible à la température du fluide. Il est indispensable que la plaque dans laquelle l'orifice est ménagé ait une épaisseur aussi fine que possible afin d'obtenir un écoulement qualifié de « à mince paroi ».

Le piston 2 continue alors sa course à vitesse réduite jusqu'à la position rétractée illustrée à la figure 3, le fluide s'écoulant alors uniquement par le deuxième conduit hydraulique 8. Le ressort 11 garantit l'appui de l'extrémité 14 du doigt 10 contre le siège 13 de sorte que le premier conduit hydraulique 7 reste fermé, tout en permettant la rétraction du doigt 10 dans le piston 2.

Pour garantir la bonne fermeture du premier conduit hydraulique 7, il suffit de prévoir un guidage axial du doigt 10 dans le piston 2 suffisamment flottant pour permettre un autocentrage de l'extrémité 14 du doigt 10 dans le siège 13. En pratique, on prévoira une extrémité 14 suffisamment longue pour faciliter cet autocentrage. Le calibrage de la restriction organisée par le deuxième conduit hydraulique 8 peut être obtenu par un perçage à un diamètre calibré de ce deuxième conduit, ou par l'utilisation d'un restricteur adéquat. Il convient de permettre une évacuation facile du fluide contenu dans la cavité 17 lors de la rétraction du doigt 10, afin d'éviter un accroissement de la pression du fluide dans la cavité 17 qui pourrait provoquer un phénomène d'amortissement résistant à la rétraction du doigt 10. De même, il convient de calibrer la raideur du ressort 11 pour assurer un bon appui de l'extrémité 14 du doigt 10 sur le siège 13, sans pour autant générer un choc au contact qui userait prématurément le siège 13.

Lorsqu'il est nécessaire de faire sortir la tige 4, on admet du fluide sous pression par le port d'extension P. Le fluide repousse le doigt 10 contre l'action du ressort 11 de sorte que le fluide peut accéder à la chambre d'extension par le premier conduit hydraulique 7.

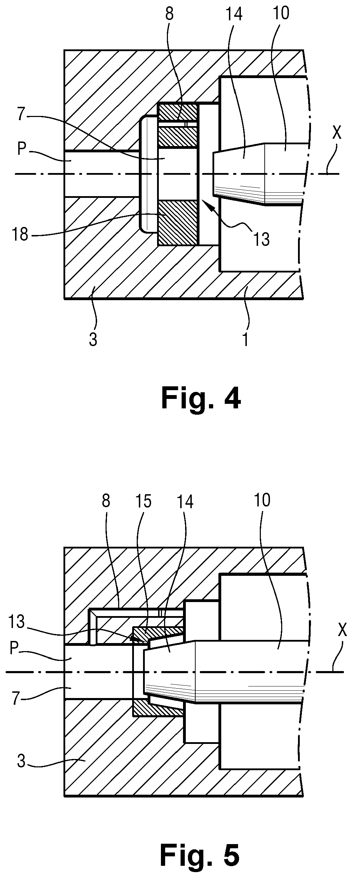

Selon une variante de réalisation illustrée à la figure 4 qui n'est pas couverte par le texte des revendications, le premier conduit hydraulique 7 et le deuxième conduit hydraulique 8 sont réalisés dans un diaphragme 18 rapporté dans le deuxième fond 3 du cylindre 1. Le siège 13 est alors constitué simplement de l'arête délimitant le bord du premier conduit hydraulique 7 en regard de l'extrémité 14 du doigt 10. Ainsi, les usinages de précision (réalisation des conduits hydrauliques 7 et 8) peuvent être réalisés sur une pièce séparée, dans un matériau adapté (par exemple du bronze) . Bien entendu, un siège séparé peut être monté sur le diaphragme 18, de façon similaire au vérin des figures 1 à 3.

Selon une autre variante de réalisation couverte par le texte des revendications et illustrée à la figure 5, on fait précéder le siège 13 d'une virole 15, qui peut comme illustré ici être venue de matière avec le siège 13, et qui a pour fonction de coopérer avec l'extrémité 14 du doigt 10 pour diminuer progressivement une section de passage du fluide par le premier conduit hydraulique 7 avant que l'extrémité 14 ne vienne en appui contre le siège 13 et ferme le conduit, afin de diminuer ou supprimer les à-coups de pression lors de la fermeture du premier conduit hydraulique 7. Ici, la virole 15 a une forme interne conique, mais toute autre forme adaptée à fermer progressivement le premier conduit hydraulique 7 est utilisable. La forme interne conique de la virole 15 a ainsi une section de passage circulaire qui diminue en allant vers le siège selon une pente progressive.

La pente progressive autorise une limitation de la vitesse du piston, en créant un amortissement progressif, et donc la montée en pression dans la chambre principale d'extension lorsque le piston coulissant arrive sur le siège contenu dans le palier. L'écoulement du fluide diminue ainsi de façon plus progressive qu'en l'absence de pente.

Avantageusement, la forme interne de la virole est dimensionnée pour réaliser aussi un guidage du doigt. Effectivement, les tolérances dimensionnelles de plusieurs pièces sont à prendre en compte pour assurer que le doigt arrive sur le siège. Une telle forme permet de diminuer les incertitudes d'usinage et les classes de précision demandées pour l'usinage des pièces. La pente et le siège seront de préférence réalisés dans la même pièce pour permettre une meilleure maîtrise du coulissement, du guidage et surtout de l'étanchéité.

Une fois le doigt en appui sur le siège, le fluide est obligé de passer par le diaphragme dont le diamètre hydraulique est petit provoquant un écoulement turbulent, comme dans un orifice à mince paroi.

L'invention n'est pas limitée à ce qui vient d'être décrit, mais englobe au contraire toute variante entrant dans le cadre défini par les revendications.

En particulier, bien que le doigt soit ici disposé sur le piston pour coulisser et se rétracter selon l'axe longitudinal X, on pourra disposer le doigt pour qu'il coulisse selon tout autre axe parallèle à l'axe longitudinal X.

Bien qu'ici le doigt 10 ait une extrémité conique 14, on pourra donner à cette extrémité toute forme apte à coopérer avec le siège en regard pour fermer le premier conduit hydraulique 7.

La restriction de section peut être usinée dans le corps du cylindre ou le diaphragme, ou être rapportée sur ceux-ci.

Le vérin de l'invention est particulièrement intéressant pour une utilisation dans un train d'atterrissage d'aéronef, en particulier pour la manoeuvre de ce train d'atterrissage entre la position sortie et la position rentrée du train d'atterrissage. Le vérin de l'invention est également utilisable comme actionneur pour mouvoir un élément mobile par rapport à un élément fixe d'un aéronef, par exemple une surface mobile de vol, un carénage d'un inverseur de poussée... Néanmoins, d'autres applications du vérin de l'invention sont envisageables, par exemple en tant qu'actionneur sur des navires ou des véhicules automobiles terrestres.

## Revendications

1. Vérin hydraulique comportant un cylindre (1) dans lequel un piston (2) solidaire d'une tige (4) est monté à coulissement étanche pour délimiter dans le cylindre une chambre hydraulique d'extension (5) et une chambre hydraulique de rétraction (6) reliées à des ports respectifs, le vérin hydraulique comportant des moyens de ralentissement du piston quand le piston s'approche d'une position rétractée, les moyens de ralentissement comportant des premier et deuxième conduits hydrauliques (7, 8) s'étendant entre le port d'extension et la chambre d'extension, le premier conduit hydraulique comportant un siège (13) tandis que le piston porte un doigt (10) rétractable ayant une extrémité (14) qui vient en appui contre le siège pour fermer le premier conduit hydraulique (7) quand le piston s'approche de la position rétractée, de sorte que seul le deuxième conduit hydraulique (8) reste ouvert alors que le piston finit sa course vers la position rétractée, **caractérisé en ce que** le siège (13) est précédé d'une virole (15) destinée à coopérer avec l'extrémité (14) du doigt (10) avant que celle-ci ne vienne en appui contre le siège pour diminuer progressivement une section de passage du premier conduit hydraulique (7).

2. Vérin hydraulique selon la revendication 1, dans lequel la virole (15) a une forme interne conique ayant une section de passage circulaire qui diminue en allant vers le siège selon une pente progressive.

3. Vérin hydraulique selon la revendication 1 ou 2, dans lequel le siège (13) et la virole (15) sont d'une seule pièce.

4. Vérin hydraulique selon l'une quelconque des revendications précédentes, dans lequel la virole a une forme interne dimensionnée pour réaliser aussi un guidage du doigt.

5. Vérin hydraulique selon l'une quelconque des revendications précédentes, dans lequel les conduits hydrauliques (7, 8) s'étendent dans un fond (3) du cylindre (1).

6. Vérin hydraulique selon la revendication 5, dans lequel le siège (13) est rapporté sur le fond du cylindre (1) .

7. Vérin hydraulique selon l'une quelconque des revendications 1 à 4, dans lequel les conduits hydrauliques (7,8) sont réalisés dans un diaphragme (18) rapporté dans le cylindre (1).

8. Vérin hydraulique selon l'une des revendications précédentes, dans lequel le doigt (10) est monté coulissant sur le piston selon un axe central (X) du cylindre.

9. Vérin hydraulique selon l'une des revendications précédentes, dans lequel l'extrémité (14) du doigt (10) est conique.

10. Vérin hydraulique selon l'une des revendications précédentes, dans lequel le doigt (10) est rétractable à l'encontre de l'action de moyens de rappel (11) poussant le doigt vers une position saillante du piston.

11. Train d'atterrissage comportant un vérin de manoeuvre du train d'atterrissage entre une position rentrée et une position sortie, **caractérisé en ce que** le vérin est conforme à l'une quelconque des revendications précédentes.

12. Aéronef comportant un train d'atterrissage conforme à la revendication 11.

## Patentansprüche

1. Hydraulikzylinder, umfassend einen Zylinder (1), in dem ein Kolben (2), der fest mit einer Stange (4) verbunden ist, auf dichte Weise verschiebbar gelagert ist, um in dem Zylinder eine hydraulische Extensionskammer (5) und eine hydraulische Retraktionskammer (6) zu begrenzen, die mit jeweiligen Öffnungen verbunden sind, wobei der Hydraulikzylinder Mittel zur Verlangsamung des Kolbens umfasst, wenn sich der Kolben einer rückgezogenen Position nähert, wobei die Verlangsamungsmittel erste und zweite Hydraulikleitungen (7, 8) umfassen, die sich zwischen der Extensionsöffnung und der Extensionskammer erstrecken, wobei die erste Hydraulikleitung einen Sitz (13) umfasst, während der Kolben einen einziehbaren Finger (10) trägt, der ein Ende (14) hat, das an dem Sitz zur Anlage kommt, um die erste Hydraulikleitung (7) zu verschließen, wenn sich der Kolben der zurückgezogenen Position nähert, derart, dass nur die zweite Hydraulikleitung (8) offen bleibt, während der Kolben seinen Hub in die zurückgezogene Position beendet, **dadurch gekennzeichnet, dass** dem Sitz (13) ein Ring (15) vorausgeht, der dazu bestimmt ist, mit dem Ende (14) des Fingers (10) zusammenzuwirken, bevor dieser an dem Sitz zur Anlage kommt, um fortschreitend einen Durchgangsquerschnitt der ersten Hydraulikleitung (7) zu verringern.

2. Hydraulikzylinder nach Anspruch 1, bei dem der Ring (15) eine konische Innenform hat, die einen kreisförmigen Durchgangsquerschnitt hat, der in Richtung des Sitzes mit einer fortschreitenden Steigung abnimmt.

3. Hydraulikzylinder nach Anspruch 1 oder 2, bei dem der Sitz (13) und der Ring (15) einstückig ausgebildet sind.

4. Hydraulikzylinder nach einem der vorhergehenden Ansprüche, bei dem der Ring eine Innenform hat, die so bemessen ist, dass sie auch eine Führung des Fingers bildet.

5. Hydraulikzylinder nach einem der vorhergehenden Ansprüche, bei dem sich die Hydraulikleitungen (7, 8) in einem Boden (3) des Zylinders (1) erstrecken.

6. Hydraulikzylinder nach Anspruch 5, bei dem der Sitz (13) an dem Boden des Zylinders (1) befestigt ist.

7. Hydraulikzylinder nach einem der Ansprüche 1 bis 4, bei dem die Hydraulikleitungen (7, 8) in einer Membran (18) ausgebildet sind, die in dem Zylinder (1) angebracht ist.

8. Hydraulikzylinder nach einem der vorhergehenden Ansprüche, bei dem der Finger (10) an dem Kolben gemäß einer zentralen Achse (X) des Zylinders verschiebbar gelagert ist.

9. Hydraulikzylinder nach einem der vorhergehenden Ansprüche, bei dem das Ende (14) des Fingers (10) konisch ist.

10. Hydraulikzylinder nach einem der vorhergehenden Ansprüche, bei dem der Finger (10) entgegen der Wirkung von Rückstellmitteln (11), die den Finger in eine aus dem Kolben vorstehende Position drücken, einziehbar ist.

11. Fahrwerk, umfassend einen Manövrierzylinder zum Manövrieren des Fahrwerks zwischen einer eingefahrenen Position und einer ausgefahrenen Position, **dadurch gekennzeichnet, dass** der Zylinder gemäß einem der vorhergehenden Ansprüche ist.

12. Luftfahrzeug, umfassend ein Fahrwerk nach Anspruch 11.

## Claims

1. Hydraulic actuator comprising a cylinder (1) in which a piston (2) secured to a rod (4) is mounted so as to slide in a sealed manner in order to delimit in the cylinder a hydraulic extension chamber (5) and a hydraulic retraction chamber (6) that are connected to respective ports, the hydraulic actuator comprising means for slowing the piston when the piston approaches a retracted position, the slowing means comprising first and second hydraulic lines (7, 8) extending between the extension port and the extension chamber, the first hydraulic line comprising a seat (13) while the piston bears a retractable finger (10) having an end (14) that comes to bear against the seat in order to close the first hydraulic line (7) when the piston approaches the retracted position, such that only the second hydraulic line (8) remains open while the piston completes its travel towards the retracted position, **characterized in that** the seat (13) is preceded by a ferrule (15) intended to cooperate with the end (14) of the finger (10) before the latter comes to bear against the seat in order to gradually reduce a flow cross section of the first hydraulic line (7).

2. Hydraulic actuator according to Claim 1, wherein the ferrule has an internal conical shape having a circular flow cross section diminishing towards the seat with a progressive slope.

3. Hydraulic actuator according to Claim 1 or 2, wherein the seat (13) and the ferrule (15) are in one piece.

4. Hydraulic actuator according to any one of the preceding claims, wherein the ferrule has an internal shape designed to also guide the finger.

5. Hydraulic actuator according to any one of the preceding claims, wherein the hydraulic lines (7, 8) extend in an end wall (3) of the cylinder (1).

6. Hydraulic actuator according to Claim 5, wherein the seat (13) is attached to the end wall of the cylinder (1).

7. Hydraulic actuator according to any one of Claims 1 to 4, wherein the hydraulic lines (7, 8) are provided in a diaphragm (18) fitted in the cylinder (1).

8. Hydraulic actuator according to one of the preceding claims, wherein the finger (10) is mounted on the piston so as to slide along a central axis (X) of the cylinder.

9. Hydraulic actuator according to one of the preceding claims, wherein the end (14) of the finger (10) is conical.

10. Hydraulic actuator according to one of the preceding claims, wherein the finger (10) is retractable counter to the action of return means (11) that push the finger towards a position protruding from the piston.

11. Landing gear comprising an actuator for manoeuvring the landing gear between an up position and a down position, **characterized in that** the actuator is in accordance with any one of the preceding claims.

12. Aircraft comprising landing gear according to Claim 11.
